Europäisches Patentamt

European Patent Office

Office européen des brevets

(19)

(11) Numéro de publication: **0 308 353**
**A1**

(12) ## DEMANDE DE BREVET EUROPEEN

(21) Numéro de dépôt: **88420306.8**

(22) Date de dépôt: **09.09.88**

(51) Int. Cl.⁴: **B 24 D 3/06**
**B 24 D 3/16**

(30) Priorité: **11.09.87 FR 8712996**

(43) Date de publication de la demande:
**22.03.89 Bulletin 89/12**

(84) Etats contractants désignés:
**AT BE CH DE ES GB IT LI NL SE**

(71) Demandeur: **SOCIETE INDUSTRIELLE DE COMBUSTIBLE NUCLEAIRE**
**4 rue du Radar**
**F-74008 Annecy (FR)**

(72) Inventeur: **Renard, Paul**
**9 clos D'Uriage**
**F-38410 Uriage (FR)**

**Roederer, Céline**
**35 chemin de Halage**
**F-38000 Grenoble (FR)**

(74) Mandataire: **Maureau, Philippe et al**
**Cabinet GERMAIN & MAUREAU BP 3011**
**F-69392 Lyon Cédex 03 (FR)**

(54) **Grains abrasifs thermostables non poreux destinés aux travaux de sciage et éléments de coupe comportant ces grains.**

(57) Ces grains abrasifs sont essentiellement constitués de produits polycristallins thermostables et non poreux, tels que le nitrure de bore cubique et le diamant ; ils présentent une forme générale parallélépipédique et aucune de leurs dimensions n'est supérieure à 1,5 mm.

Dans les éléments de coupe rotatifs ou alternatifs qui les renferment, ils sont liés par une phase céramique et sont dispersés de façon aléatoire dans une matrice métallique.

EP 0 308 353 A1

Bundesdruckerei Berlin

**Description**

## GRAINS ABRASIFS THERMOSTABLES NON POREUX DESTINES AUX TRAVAUX DE SCIAGE ET ELEMENTS DE COUPE COMPORTANT CES GRAINS

La présente invention concerne des grains abrasifs thermostables non poreux destinés aux travaux de sciage ou découpe rapide, ainsi que les éléments de coupe comportant ces grains, tels que les segments de scie.

On sait que les éléments de coupe utilisés pour la réalisation d'outils tels que des segments de scie, destinés à travailler la pierre, l'asphalte, le béton ou certains matériaux ferreux, comportent généralement, comme éléments abràsifs, des grains de diamant ou de nitrure de bore cubique (NBC) monocristallins dispersés dans un liant métallique ou fixés par électrodéposition.

Parmi les liants les plus utilisés, on peut citer le fer, le bronze, le nickel, le cobalt et la stellite. A ce liant est souvent ajouté un autre composé comme, par exemple, le carbure de tungstène.

Les grains de diamant ou de NBC, appelés produits ultra-durs (PUD) dans la suite du texte, peuvent être bloqués dans la matrice de liant par métallurgie des poudres ou fixés par électrodéposition. Pour la première solution, on peut notamment mélanger une poudre de diamant ou de NBC de granulométrie convenable à un liant métallique et à un autre abrasif également pulvérulent, tasser le mélange dans un moule, puis former la matrice par frittage du liant suivant des techniques bien connues des hommes du métier.

L'examen de l'évolution d'un tel élément au fur et à mesure de son emploi fait apparaître une usure du liant en "queue de comète" derrière les cristaux de produits ultra-durs. Au fur et à mesure que le liant s'use, le cristal est de moins en moins enrobé par le liant.

Finalement, le cristal disparaît, partiellement par usure, mais surtout parce qu'il se déchausse et se sépare de la matrice dès que sa profondeur d'ancrage dans le liant devient insuffisante. Les grains de diamant ou de NBC ne sont, en conséquence, utilisé que très partiellement avant d'être arrachés de l'outil.

L'élément de coupe décrit dans FR-A-2 568 810 de la Demanderesse ne présente pas cet inconvénient.

Cet élément de coupe est obtenu en préparant, soit des cubes de diamant polycristallin obtenus directement dans une cellule à ultra-haute pression, soit des pastilles de diamant polycristallin que l'on broie pour obtenir des fragments, puis en lixiviant les cubes ou fragments ainsi obtenus à l'acide pour éliminer le liant-catalyseur rendant ainsi le produit poreux et thermostable, enfin, après mélange des grains dudit diamant polycristallin thermostable avec un liant et éventuellement des grains de diamant naturel ou synthétique, en effectuant un frittage du liant pour constituer une matrice.

Il faut rappeler que la fabrication des grains de PUD polycristallin thermostable commence comme celle des grains de PUD polycristallin classique. Pour plus de clarté, la suite de l'exposé sera faite sur le diamant. Les mêmes développements peuvent être faits sur le NBC.

C'est ainsi que l'on fabrique, tout d'abord, le diamant monocristallin par maintien à haute température et haute pression du graphite dans la presse, en présence d'un catalyseur, suivant un processus maintenant bien connu. Le dé qui sort de la presse contient du diamant monocristallin. Le diamant est isolé, fragmenté puis mélangé à un liant-catalyseur, mis en forme et porté de nouveau à haute température et à haute pression, pendant une durée suffisante pour provoquer la liaison par "pont" des grains de diamant polycristallin suivant les procédés bien connus de fabrication du PCD.

Les pastilles de diamant polycristallin ainsi constituées présentent, sur le diamant monocristallin naturel ou artificiel, de nombreux avantages bien connus. Mais elles ont des limitations d'emploi. En particulier, si le liant n'est pas thermostable, la présence du liant-catalyseur limite la température d'emploi de l'outil. Lorsque la température à laquelle la pastille est portée lors du travail est élevée, il peut y avoir dégradation du fait que le catalyseur qui subsiste dans la pastille diminue l'énergie d'activation requise pour que le diamant revienne à son état initial et il peut y avoir rupture par suite de la différence entre les coefficients de dilatation thermique du diamant et du liant.

Pour rendre le diamant polycristallin thermostable, il convient donc d'éliminer le liant non thermostable par lixiviation ou d'utiliser un liant thermostable. Dans le premier cas, on obtient des grains de diamant polycristallin dans lesquels les micro-cristaux de diamant sont maintenus assemblés uniquement par des "ponts" apparus lors du traitement de transformation du diamant monocristallin.

On notera que dans FR-A-2 568 810, cette porosité permet une infiltration capillaire du métal de la matrice dans le grain et ainsi renforce la liaison entre les grains thermostables poreux et la matrice. De ce fait, le déchaussement des grains est reculé et n'intervient qu'après une usure beaucoup plus importante, donc permet une durée de vie de l'outil plus longue.

On s'est toutefois aperçu que, pour conserver aux produits lixiviés leurs qualités de thermostabilité, il était indispensable de travailler en atmosphère réductrice, ce qui est rarement le cas dans l'industrie. En effet, la durée de vie du produit est réduite par son oxydation, lorsqu'il est porté à des températures élevées.

On s'est donc attaché à mettre au point des produits abrasifs thermostables non poreux ne présentant pas ces inconvénients.

Dans ces produits abrasifs diamantés thermostables non poreux, tels notamment que celui décrit dans FR-A-86 07 069 de la Demanderesse, les grains de diamant sont directement liés entre eux par des pontages créés par diffusion de matière à l'état plastique, le vide entre les grains de diamant étant occupé par une phase liante céramique contenant, d'une part, de silicium ou du titane et, d'autre part, du nickel, seul (dans le cas du titane) ou allié essentiellement à du fer (dans le cas du silicium).

La nature thermostable et non poreuse de ces produits abrasifs limite fortement les dégradations de qualité lors des variations de température. Ceci est dû au faible coefficient de dilation thermique de la matrice et à la protection fournie par la phase céramique en surface des grains.

Ces grains de produits abrasifs diamantés thermostables et non poreux trouvent surtout des applications pour des produits de forage.

Leur application dans le domaine des produits de sciage impose que soit réalisé, en l'absence de porosité, un bon accrochage avec le liant métallique de la matrice de l'outil.

La présente invention s'est donné pour but de fournir des grains abrasifs de type diamant ou nitrure de bore cubique polycristallins thermostables et non poreux ayant une tenue au déchaussement telle qu'elle permette de repousser leur usure jusqu'à des limites non atteintes par les techniques antérieures.

La Demanderesse a déterminé qu'il était possible d'atteindre cet objectif en communiquant à ces grains abrasifs thermostables et non poreux une forme générale parallélépipédique.

Cette forme facilite, d'une part, l'implantation des grains dans la matrice métallique de l'outil de coupe et limite donc le risque de déchaussement ; la surface extérieure des grains comporte, par ailleurs, des arêtes qui facilitent l'attaque du matériau à découper.

La fabrication des grains abrasifs parallélépipédiques selon l'invention est avantageusement effectuée par découpe laser d'un ensemble compact de dimension relativement importante en parallélépipèdes dont aucune des dimensions n'est supérieure à 1,5 mm.

La présente invention concerne donc des grains abrasifs destinés aux travaux d'usinage et notamment de sciage qui sont essentiellement constitués de produits polycristallins, tels que le nitrure de bore cubique et le diamant, thermostables et non poreux, liés entre eux par une phase céramique, qui présentent une forme générale parallélépipédique, aucune de leurs dimensions n'étant supérieure à 1,5 mm.

Selon un mode de réalisation préféré de l'invention, les grains abrasifs présentent une forme générale essentiellement cubique.

Ces grains de PUD polycristallins thermostables et non poreux sont fabriqués selon les techniques classiques d'obtention de ces produits et notamment selon la technique décrite dans FR-A-86 07 069 (diamant) ou EP-A-0 181 258 (NBC).

Pour certaines applications, la liaison entre ces grains et la matrice métallique de l'outil de coupe doit être renforcée.

Selon un mode de réalisation de l'invention, chaque face des grains est alors recouverte d'un agent liant, par exemple du type titane ou alliage de titane, appliqué selon la technique de dépôt en phase vapeur (Physical Vapor Deposition ou PVD, Chemical Vapor Deposition ou CVD).

Le titane peut également être appliqué sur chaque face des grains par la technique classique dite du "flash".

L'invention concerne également des éléments de coupe rotatifs ou alternatifs mis en forme par métallurgie des poudres et comprenant des particules abrasives qui sont caractérisés par le fait que les particules abrasives sont des grains de produits polycristallins, tels que le nitrure de bore cubique et le diamant, thermostables et non poreux, liés entre eux par une phase céramique, de forme générale parallélépipédique, dispersés de façon aléatoire dans une matrice métallique.

Selon un mode de réalisation particulier de l'invention, la matrice métallique comporte, en outre, des grains de diamant monocristallin synthétique ou naturel ou des grains de NBC monocristallin synthétique.

La proportion de grains abrasifs polycristallins par rapport aux grains monocristallins se situe entre 10 et 95 %.

Chaque face des grains abrasifs parallélépipédiques est avantageusement revêtue d'un agent liant facilitant l'accrochage des grains avec le liant métallique de la matrice.

La fabrication des éléments de coupe selon l'invention va maintenant être décrite.

On fabrique, d'abord, les grains abrasifs thermostables et non poreux par exemple selon le procédé suivant, décrit dans FR-A-86 07 069.

On place une charge de grains de diamant mélangés à de la poudre de nickel et de fer ; puis du silicium sous forme d'un disque ou d'une fine couche de poudre dans une cellule ; on porte la cellule contenant l'empilement ainsi réalisé à une température dépassant 1 200°C sous une pression dépassant 45 kbars dans une presse, les pression et température étant choisies pour correspondre à la zone de stabilité du diamant ; on maintient la cellule en température et en pression pendant une durée suffisante pour provoquer le frittage en phase plastique des grains de diamant entre eux.

On découpe ensuite, au laser, des parallélépipèdes dont aucune des dimensions n'est supérieure à 1,5 mm. La dimension optimale des grains dépend de la nature du matériau à usiner, de la vitesse de coupe et du fini à obtenir.

La fabrication de l'élément de coupe se fait ensuite de façon classique.

On prépare, tout d'abord, un mélange contenant le liant en poudre destiné à constituer la matrice (fer, cobalt, bronze ou nickel par exemple), les grains abrasifs thermostables et non poreux selon l'invention et des grains de diamant naturel ou artificiel en proportion correspondant à l'application envisagée, et souvent une autre charge comme par exemple le carbure de tungstène. Une charge du mélange est placée dans un moule muni des moyens de chauffage et dont la forme correspond à celle de l'élément à réaliser. Ce moule est muni de moyens, par exemple un poinçon, permettant de mettre la charge en compression. L'ensemble de ces éléments peut être incorporé à une presse. Le frittage s'effectue de façon classique sous pression.

Une fois le frittage terminé, l'élément obtenu est séparé du moule. Il peut, si nécessaire, être mis en forme par l'un des modes d'usinage applicables au diamant, notamment par rectification, laser, électro-érosion ou faisceau d'électrons. L'élément fini est fixé, de façon classique (brasage, soudage...), sur son support, par exemple un disque.

On a réalisé, selon le procédé décrit ci-avant, des disques destinés à différentes applications avec des matrices métalliques convenablement adaptées.

## Sciage de calcaire tendre et abrasif type pierre du Pont du Gard

La matrice métallique est constituée de 90 % de carbure de tungstène et de 10 % de cobalt.

La charge diamantée est de 100 % de grains abrasifs thermostables et non poreux selon l'invention passant au tamis à maille 0,70 mm, soit 25 mesh.

## Sciage d'asphalte

Dans ce cas, la matrice est constituée de 70 % de carbure de tungstène et de 30 % de cobalt ; la charge diamantée est de 40 à 50 % de grains polycristallins selon l'invention et 50 à 40 % de diamant monocristallin passant au tamis à maille de 0,51 mm soit 35 mesh.

## Sciage de granit

La matrice est entièrement en cobalt et la charge est de 10 %.

Dans tous les cas, on peut constater une augmentation de la durée de vie de l'outil de 30 à 50 % et une augmentation de la vitesse d'avance de 30 à 50 % par rapport à un segment de coupe équivalent équipé en diamant monocristallin uniquement.

Les disques peuvent être utilisés dans toute atmosphère industrielle.

## Revendications

**1-** Grains abrasifs destinés aux travaux d'usinage et notamment de sciage ou découpe rapide, caractérisés en ce qu'ils sont essentiellement constitués de produits polycristallins thermostables et non poreux, tels que le nitrure de bore cubique et le diamant, en ce qu'ils présentent une forme générale parallélépipédique, et en ce qu'aucune de leurs dimensions n'est supérieure à 1,5 mm.

**2-** Grains selon la revendication 1, caractérisés en ce qu'ils présentent une forme générale essentiellement cubique.

**3-** Grains selon la revendication 1 et la revendication 2, caractérisés en ce que chaque face des grains est recouverte d'un agent favorisant leur accrochage, du type titane ou alliage de titane, appliqué selon les techniques de dépôts en phase vapeur (PVD, CVD).

**4-** Grains selon la revendication 1 et la revendication 2, caractérisés en ce que le titane est appliqué sur chaque face des grains par la technique dite du "flash".

**5-** Eléments de coupe rotatifs ou alternatifs mis en forme par métallurgie des poudres et comprenant des particules abrasives, caractérisés par le fait que les particules abrasives sont des grains de produits polycristallins, tels que le nitrure de bore cubique et le diamant, thermostables et non poreux, liés entre eux par une phase céramique, de forme générale parallélépipédique, dispersés de façon aléatoire dans une matrice métallique, aucune des dimensions des grains n'excédant 1,5 mm.

**6-** Eléments de coupe selon la revendication 5, caractérisés en ce que la matrice comporte, en outre, des grains de diamant ou nitrure de bore cubique monocristallins.

**7-** Eléments de coupe selon la revendication 6, caractérisés en ce que la proportion de grains abrasifs polycristallins par rapport aux grains monocristallins se situe entre 10 et 95 %.

**8-** Eléments de coupe selon l'une des revendications 5 à 7, caractérisés en ce que chaque face des grains abrasifs parallélépipédiques est revêtue d'un agent liant facilitant l'accrochage des grains avec la matrice.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,P | EP-A-0 246 118  (S.I. DE COMBUSTIBLE NUCLEAIRE)<br>* Résumé; revendication 1 * | 1,2,5,6 ,7 | B 24 D   3/06<br>B 24 D   3/16 |
| A | EP-A-0 071 771  (GENERAL ELECTRIC)<br>* Page 3, lignes 3-15; page 5, lignes 5-10; revendications 1-6 * | 3,4,8 | |
| A | EP-A-0 220 964  (DE BEERS)<br>* Résumé; page 4, lignes 18-23 * | 1,2,5,6 | |
| A | EP-A-0 014 589  (DE BEERS)<br>* Page 1; figures 3,4; page 2, lignes 1-5 * | 1,2,5,6 | |
| A | FR-A-2 017 160  (DU PONT)<br>* Page 1; revendications 1,2 * | 1,2,5,6 | |

DOMAINES TECHNIQUES
RECHERCHES (Int. Cl.4)

B 24 D
C 09 K

Le présent rapport a été établi pour toutes les revendications

| Lieu de la recherche | Date d'achèvement de la recherche | Examinateur |
|---|---|---|
| LA HAYE | 21-10-1988 | WEINBERG J.J.M. |

EPO FORM 1503 03.82 (P0402)